# EUROPEAN PATENT SPECIFICATION

(11) **EP 2 525 696 B1**
(45) Date of publication and mention of the grant of the patent: **30.07.2014**
(21) Application number: 11706033.5
(22) Date of filing: 19.01.2011
(51) Int. Cl.: A47J 43/10

(54) **DEVICE FOR AGITATING LIQUID FOODSTUFF**
SCHÜTTELVORRICHTUNG FÜR FLÜSSIGE NAHRUNGSMITTEL
DISPOSITIF PERMETTANT D'AGITER UN ALIMENT LIQUIDE

(30) Priority: 20.09.2010 WO PCT/NL2010/050611; 19.01.2010 NL 2004113
(43) Date of publication of application: 28.11.2012
(73) Proprietor: Foremost B.V., 5211 BC Den Bosch (NL)
(72) Inventor: ELISSEN, Elissen Dhr. Petrus Adrianus Johannes M., NL-1251 CW Laren (NL)
(74) Representative: Plougmann & Vingtoft A/S
(86) International application number: PCT/NL2011/000003
(87) International publication number: WO 2011/090372

(56) References cited:
- EP-A1- 1 430 824
- EP-A1- 1 859 717
- WO-A1-03/003888
- WO-A1-2009/097705
- WO-A1-2010/094153
- DE-U1- 29 713 859
- FR-A1- 2 920 658
- US-A1- 2006 044 935

## Description

### FIELD OF THE INVENTION

The invention relates to a device for agitating liquid foodstuff. In particular, the invention relates to a device for whipping or agitating liquids to give them a more solid or frothy nature.

### BACKGROUND OF THE INVENTION

Whipping liquids to give them a more solid nature, like whipping cream or egg-whites, is usually considered a tedious exercise. In particular if this has to be done by hand, but also by means of mechanical or electromechanical aids. In particular whipping cream poses issues. Preferably, the cream should cool enough. Additionally, whipping cream for too long will result in separation of the cream in butter and skimmed milk.

Various devices are known in the art for whipping cream. However, such machines are usually bulky and heavy, like the 5KSM150PS and the 5KFPM770 as marketed under the brand of Kitchenaid.

A prior art device is for example disclosed in document US 2006/044935 A1.

### OBJECT AND SUMMARY OF THE INVENTION

It is an object of the invention to provide a device for agitating liquid foodstuff with improved user convenience, in particular with respect to cleaning and storing liquid foodstuff.

It is an additional object to provide a device enabling efficient agitation or whipping of a liquid food, e.g. like cream, egg whites, etc.

A device is provided being a device for whipping or agitating a liquid to give the liquid a more solid or frothy nature, comprising: an inner container, which inner container is suitable for receiving the liquid, a main body comprising an opening adapted to releasably receive the inner container; an agitation element for agitating the liquid when the liquid is received in the inner container and the inner container is received in the opening of the main body; a driving element for driving the agitation element; and an electrical connection for providing electrical energy to the driving element wherein the inner container comprises a handle.

By providing an opening for releasably receiving an inner container, a separate inner container can be used in conjunction with the device. This inner container is releasable, so it can be put in a dishwashing machine or submersed in a sink with water without any risk of damaging the electrical components of the device. In this way, the inner container can easily be operated, and hygienically and conveniently be cleaned. A further advantage of a releasable inner container is that the container e.g. can be used for storing the liquid in the refrigerator without having to be put it in a separate bowl/container.

The inner container comprises a handle and the device may further comprise a further opening like a slit, recess or the like at the side for receiving the handle of the inner container when fitted in the opening of the main body. By providing the handle, the inner container can also be properly handled e.g. when comprising the whipped or agitated liquid. Depending on the location and design of the handle of the inner container, the further opening may be advantageous in the main body for accommodating the handle. The further opening may also be located in a cover or lid of the device. As yet another alternative, both the main body and the cover may each comprise a further opening, i.e. with the handle being accommodated partially by each further opening.

By handle is generally to be understood any structure that enable handling of the inner container by a user.

The handle may e.g. be substantially flat at least at the part that goes between cover and the main body when the device is assembled or it can have other shapes as explained elsewhere or being readily apparent. Having at least a flat part of the handle in this way, makes it easy to accommodate the handle between the main body and the lid or cover when the lid or cover is fitted onto the inner container or onto the main body or onto both.

By inner container is meant a container that is substantially received in the main device when inserted into this. In one embodiment, the height of the inner container is received at least 50% or more when the inner container is inserted into the main body. In another embodiment, the height is received at least 75% or more. In yet another embodiment, the height is received at least 90% or received 95 % to 99% or 100 % e.g. with only the rim or upper edge of the inner container being above the rim or upper edge of the opening of the main body.

A further embodiment of the device according to the invention comprises at least one fixation element for fixating the inner container to the device upon or after receiving the inner container in the opening.

An embodiment of the inner container comprises at least one fixation element for fixating the inner container to the device upon receiving the inner container in the opening. The fixation element of the inner container may be instead or in addition to a fixation element of the device. While agitating the liquid in the container, the momentum of the liquid may at least partially be transferred to the inner container. If the inner container is loosely fitted in the opening of the device, this transfer of momentum may result in movement of the container. This, in turn, may result in spilling of the liquid and/or less effective agitation or frothing of the liquid or milk.

Such a fixation element may e.g. be the further opening since the inner container may be fixated if or when the handle is fixated in the further opening or as described elsewhere.

In another embodiment, the inner container comprises an upper rim of which at least a portion extends beyond the upper level or rim or edge of the opening of the device when the inner container is received in the opening of the device.

As already discussed, care has to be taken for the electrical components of the device. As the inner container is to be received by the opening of the device, the boundary between the outer wall of the inner container and the inner wall of the device, i.e. the opening, may not always be properly sealed. In that case, there is a risk of liquid leaking into the opening of the device, potentially damaging the electrical -or other - elements of the device. By providing an at least partially extended upper rim of the device, this risk is reduced. In addition, cream, being a perishable dairy product, or other liquid foods should not go into places where it does not belong, like in the inner parts of the main body. So even if the inner electronics of the main body are well protected, leakage of liquid in the opening in the main body should still preferably be prevented.

In a further embodiment of the inner container, the upper rim of the inner container has an orientation of substantially 85° - 95° or 90° to the sidewall of the inner container and points away from the centre of the container.

With this embodiment, the risk of leakage of liquid into the inner side of the device is even further reduced or even avoided, because the rim extends beyond the boundary between the inner container and the wall of the opening in the device for receiving the inner container.

### BRIEF DESCRIPTION OF THE DRAWINGS

The invention will now be discussed referring to drawings. These drawings are provided to illustrate embodiments of the invention and are provided as examples rather than to limit the scope of the invention. In the drawings:
- Figure 1: shows an embodiment of the device according to the invention;
- Figure 2: shows a device not forming part of the invention such as claimed;
- Figure 3: shows another embodiment of the device according to the invention;
- Figure 4: shows an embodiment of the inner container according to the invention;
- Figure 5 A: shows a cross-section of a further embodiment of the inner container according to the invention;
- Figure 5 B: shows a cross-section of another embodiment of the inner container according to the invention; and
- Figure 6: shows a cross-section of a further device not forming part of the invention such as claimed.

### DESCRIPTION OF PREFERRED EMBODIMENTS

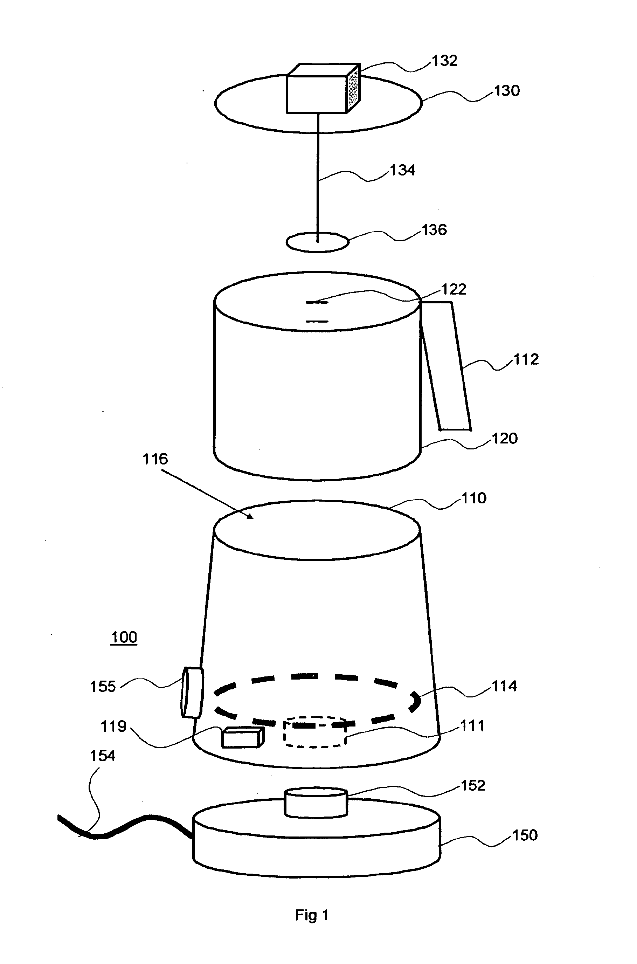

Figure 1 schematically illustrates a cream whipper 100 as an embodiment of the device according to the invention. Alternatively, the device may be a milk frother for frothing milk with the same elements and functions - unless specifically mentioned to be different - as for the cream whipper. This applies to the devices described in connection with the other figures and throughout the text as well. The cream whipper 100 comprises a main body 110, a base plate 150 and a lid or cover 130. In addition, Figure 1 shows an inner container 120 with a handle 112.

The base plate 150 has an electrical power cord 154 connected thereto for powering the cream whipper 100 and a contact stub 152 comprising electrical contacts for providing electrical power to the main body 110. Preferably, the contact stub 152 comprises three contacts, namely phase, zero and ground. The ground contact may be omitted, though it may be present for safety reasons.

The main body 110 may comprise a cooling element 114, a microcontroller 119, a control knob 155 and an opening 116 for receiving the inner container 120. The cooling element 114 may be omitted. In addition, the main body comprises a contact recess 111 for accommodating the contact stub 152. The contact recess 111 preferably comprises the same number of contacts as present in the contact stub 152. Such contact/stub recess combinations are commercially available from the company Otter, with reference CS4 or CS7, among others. The cooling element 114 is connectable to electrical power, for example by means of electrical conductors like wires (not shown) to the contacts in the contact recess 111. Additionally, the cream whipper 100 may comprise electrical elements like an on/off switch, a timing element, a control light like an LED and/or a thermostat that is electrically connected to the contact recess 111.

The lid 130 comprises a driving element like a motor 132 connected to a shaft 134 for driving an agitation element 136, e.g. a circular annular spring, a wire whisk, or the like. The motor 132 is electrically connected, e.g. via conducting wires, to the contacts in the contact recess 111. Additional elements like a transformer, rectifier, an on/off switch and/or other may be placed in between the contacts in the contact recess 111 and the motor 132. The lid 130 can be placed on the inner container 120 and on the main body 110, thus closing the opening 116.

To provide electrical power to the motor 132 in the lid 130, electrical contacts may be provided at the top region of the main body with corresponding electrical contacts being provided in the lid 130. The electrical contacts provided at the top region of the main body 110 are connected to the contacts in the contact recess 111. In a further embodiment, the motor may receive electrical power from the main body 110 by means of an inductive coupling.

For proper contact between the electrical contacts on the main body 110 and the corresponding electrical contacts on the lid 130, the electrical contacts are to be aligned properly. Various elements can be added to either the main body 110 or the lid 130, or both. For example, protrusion can be applied to the first and a recess or groove to the other, or vice versa. The protrusion can be either pointwise or elongated. The protrusion can be applied in a vertical way, along the side of either the main body 110 or the lid 130, from the centre of the lid 130 or the main body 110 in a horizontal way or parallel to the circumference of either the main body 110 or the lid 130.

The inner container 120 may comprise indicator elements 122 for indicating a maximum level of liquid and a minimum level of liquid required for proper operation of the cream whipper 100. The indicators can be provided as either protrusions or recesses in the inner wall of the inner container 120. The inner container 120 can be fit in the opening 116 in the main body 110. In operation, the bottom of the inner container 120 is located closely to or in contact with the cooling element 114. In this way, liquids in the inner container 120 - preferably cream - can be effectively cooled by means of the cooling element 114.

For obtaining properly whipped cream, the cream should preferably have a temperature between 0°C and 7°C. This can be obtained by storing the cream in a refrigerator for a longer period, though is this not always possible or preferred. Therefore, alternative ways of cooling the cream can be envisaged, being other than using pre-cooled cream. Therefore, optionally, a compressor-based system as used in a refrigerator can be implemented in the main body 110, though this will in most cases yield a very bulky device. Alternative, Peltier elements can be used. Peltier cooling elements have an advantage that they can be used in a scalable way. Alternatively, other suitable cooling element(s) may be used.

The operation of the cream whipper 100 is controlled by means of the microcontroller 119 and the control knob 155. The microcontroller 119 is coupled to the control knob 155 and to various actuators of the cream whipper, (like the cooling element) 114 and the motor 132, for controlling those actuators. With the control knob 155, a user of the cream whipper 100 is able to control at least one action of the cream whipper 100, like turning the motor 132 on or off, the rotation speed of the motor 132, turning the cooling element 114 on or off, and/or setting a time for the motor 132 and/or the cooling element 114 to be active. The control knob 155 may be operated in steps or in a continuous way. One or more buttons (not shown) may also replace the control knob 155 or be used in addition to it (for additional purposes).

The rotation speed of the motor 132 is preferably adjustable between 100 and 500 revolutions per minute and the timer for whipping the cream is preferably adjustable between one and six minutes. They may be adjustable in steps or increments or in a continuous way. Alternatively, either one of those parameters is set and only one is adjustable. In case the rotation speed is fixed, it is preferably set at a value between 350 revolutions per minute and 400 revolutions per minute. In case the time is fixed, it may be fixed at a value between three and four minutes.

The liquid is agitated by means of the agitation element 136 e.g. like a circular annular spring, a wire whisk, or the like, thereby whipping the cream. Advantageously, the shaft 134 is placed outside the middle of the inner container 120. This is to prevent a substantial part of the liquid to spin around the centre of the inner container. Cream is whipped better with a turbulent movement.

The cooling element 114 can be activated either before operating the cream whipper 100, during operation, or both. In case the cream to be whipped is not by itself, the cream is cooled by the cooling element 114 before whipping the cream.

The inner container 120 is insertable in the opening 116 and releasable or removable or detachable from the main body 110. The inner container is e.g. loosely or tightly fit in the opening 116. Alternatively, the inner container 120 and the main body 110 are provided with one or more fixating elements to releasably fixate or secure the inner container 120 in the opening 116. The fixating elements can be embodied in various ways as explained in the following.

Magnetic elements may e.g. be provided at the bottom of the opening 116, while the inner container 120 is made out of a ferro-magnetic material like steel. An advantage of this embodiment is that no fixating means need to be provided on the inner container 120. If the inner container 120 is not substantially made from a ferromagnetic material, additional magnets can be applied to the inner container, either to the sides, the bottom or both. The inner container 120 may also be provided with a thread to screw the inner container in the opening 116. The thread may for example be provided at the outer circumference of the inner container 120. In this embodiment, a mating thread is provided at the inner circumference of the opening 116 Alternatively, a cylindrical stub with a thread is provided at the bottom (or elsewhere) of the inner container 120. In this embodiment, a cylindrical recess is provided at the bottom (or elsewhere) of the opening 116 with a mating thread.

In yet another embodiment, either the inner container 120 or the main body 110 is provided with at least one spring loaded protrusion and the other element - either the main body 110 or the inner container 120, respectively - is provided with at least one recess in which the spring loaded protrusion fits when the inner container 120 is fit in main body 110. The protrusions and/or spring loaded protrusion are provided at the sidewalls of the inner container 120 and/or the opening 116. The spring loaded protrusions may indeed be realised using actual spiral springs acting on movable protrusions, either not attached to the inner container or the main body 110. Alternatively, the spring loaded protrusions are embodied in one piece as a flexible tongue of a resilient material fixed on one end and having a protrusion on the other hand, with the resilient tongue acting as a spring. Alternatively, spring loaded protrusions may be implemented in another way.

In a further embodiment, the inner container 120 can be fixated in the main body 110 by means of a bayonet closing. A bayonet closing usually comprises at least two protrusions on a first element and at least two L-shaped recesses or openings on a second element. Both elements are cylindrically shaped, where one element is fitted in the other element. The protrusions of the first element are fit in first legs of the L-shaped recesses or openings with a pushing action and with a twisting action in second legs of the L-shaped recesses or openings. The bayonet closing may be provided with a spring. The purpose of the spring is to push the element fitted in the other out of the other while removing the element. The element is pushed out of the other when the protrusions are moved out of the second legs of the L-shaped recesses or openings.

Additionally or alternatively, the inner container 120 may be provided with at least one preferably vertical recess in the outer wall and the wall of the opening 116 may be provided with a protrusion fitting in said recess or vice versa. The recess or recesses and the protrusion or protrusions enable improved guidance while inserting the inner container 120 in the main body 110. This embodiment is particularly advantageous when the inner container 120 is to be inserted in the main body 110 with a specific orientation. The recesses may also be embodied as grooves or slits, where applicable. With these embodiments, the inner container 120 is slid into the opening 116 in the main body.

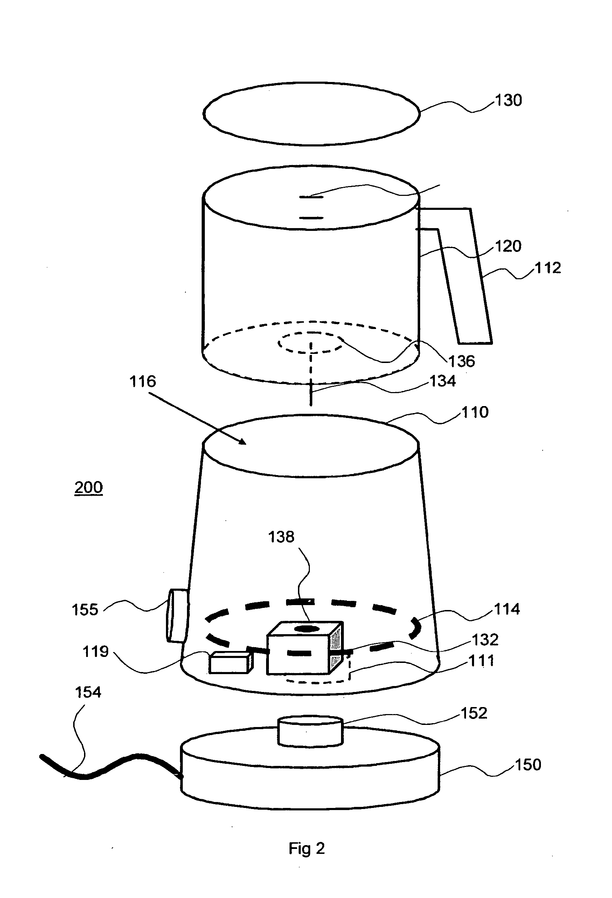

Figure 2 discloses a cream whipper 200 as a device not forming part of the invention such as claimed. The cream whipper 200 comprises a main body 110, a base plate 150 and a lid or cover 130. In addition, Figure 2 discloses an inner container 120 with a handle 112.

The base plate 150 has an electrical power cord 154 connected thereto for powering the cream whipper 100 and a contact stub 152 comprising electrical contacts for providing electrical power to the main body 110. Preferably, the contact stub 152 comprises three contacts, namely phase, zero and ground. The ground contact may be omitted, though may be present for safety reasons.

The main body 110 may comprise a cooling element 114, and an opening 116 for receiving the inner container 120. In addition, the main body comprises a contact recess 111 for accommodating the contact stub 152. The contact recess 111 comprises the same number of contacts as present in the contact stub 152. Such contact/stub recess combinations are commercially available from the company Otter, with reference CS4 or CS7, among others. The cooling element 114 is connectable to electrical power by means of electrical conductors like wires to the contacts in the contact recess 111. Additional electrical elements like an on/off switch, a control light like an LED and/or a thermostat are electrically connected to the contacts in the contact recess 111 and the cooling element 114.

The main body also comprises a motor 132 that in this embodiment is placed at the bottom or lower part of the cream whipper instead of in the lid as in Figure 1. The motor 132 is electrically connected to the contacts in the contact recess 111, for example. Additional elements like a transformer, rectifier, microcontroller, an on/off switch and other may be electrically connected to the contacts in the contact recess 111 and the motor 132, for example by means of conducting wires. The motor 132 is connected to a mechanical connector 138 to connect to a shaft 134 for driving an agitation element 136 e.g. in the form of a circular annular spring, a wire whisk, or the like comprised within the inner container 120.

The shaft 134 is fit in an opening in the inner container 120 to enable the agitation element to be driven. When removing the inner container, the shaft 134 is removed from the mechanical connector 138. Optionally, the shaft 134 can be removed from the inner container 120 for the purpose of cleaning the inner container 120 and/or the shaft 134. Preferably, the opening in the inner container 120 through which the shaft 134 during operation is provided is well sealed when the shaft 134 is in place. This can be done by means of an O-ring of either natural or synthetic rubber, like silicon rubber, or other flexible materials. Proper sealing of the opening is important to avoid leakage of liquid from the inner container to the inner parts of the main body 110 to prevent for example damage to the electronic circuitry.

In a further embodiment, the agitation element 136 is connected to the motor 132 by means of a magnetic coupling. To this end, a hollow and at the upper side closed protrusion may be provided at the bottom of the inner container 120. From the bottom, a shaft with magnets - either permanent or electrical - are provided, which shaft is connected to the motor 132. The agitation element 136 may also be provided with magnets, which are in use coupled to the magnets connected to the shaft that is connected to the motor 132. In this way, operation of the motor results in driving the agitation element 136.

The inner container 120 can be fixated in the opening 116 of the main body 120 in various ways, as discussed before. The lid 130 fits on the top of the inner container 120 and the opening 116.

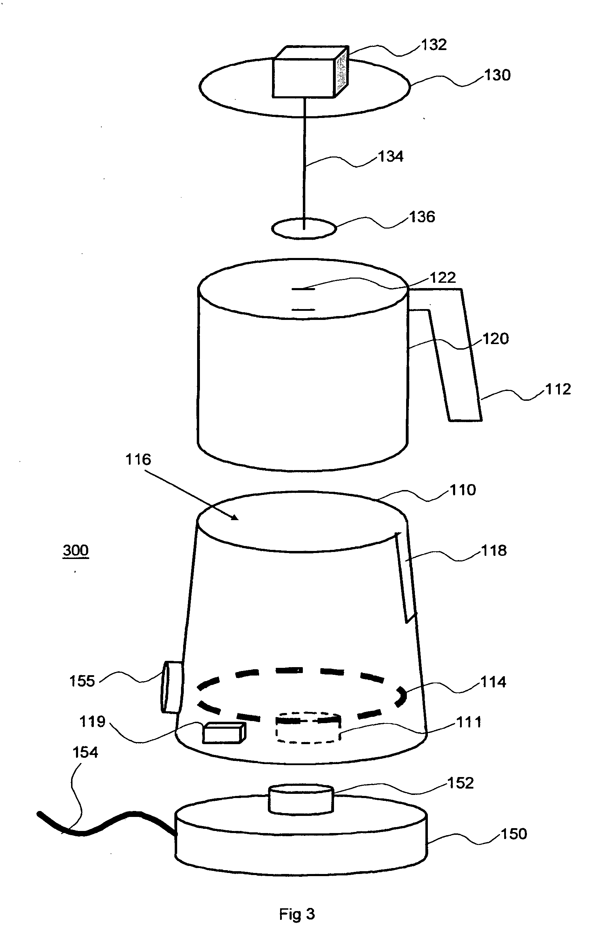

Figure 3 discloses a cream whipper 300 as a further embodiment of the device according to the invention. The cream whipper 300 comprises a main body 110, a base plate 150 and a lid or cover 130. In addition, Figure 3 discloses an inner container 120.

The base plate 150 has an electrical power cord 154 connected thereto for powering the cream whipper 100 and a contact stub 152 comprising electrical contacts for providing electrical power to the main body 110. Preferably, the contact stub 152 comprises three contacts, namely phase, zero and ground. The ground contact may be omitted, though may be present for safety reasons.

The main body 110 comprises an optional cooling element 114 and an opening 116 for receiving the inner container 120. In addition, the main body comprises a contact recess 111 for accommodating the contact stub 152. The contact recess 111 comprises the same number of contacts as present in the contact stub 152. Such contact/stub recess combinations are commercially available from the company Otter, with reference CS4 or CS7, among others. The cooling element 114 is connectable to electrical power by means of electrical conductors like wires to the contacts in the contact recess 111. Additional electrical elements like an on/off switch, a control light like an LED and/or a thermostat may be electrically coupled to the contacts in the contact recess 111 and the cooling element 114, for example by means of electrical wires.

The lid 130 comprises a motor 132 connected to a shaft 134 for driving an agitation element 136 e.g. a circular annular spring, a whisk, or the like. The motor 132 is electrically connected to the contacts in the contact recess 111, for example via conducting wires. Additional elements like a transformer, rectifier, microcontroller, an on/off switch and other may be electrically contacted to each other and/or the contacts in the contact recess 111 and the motor 132. The lid 130 can be placed on the inner container 120 and on the main body 110, thus closing the opening 116. In a further embodiment, the motor receives electrical power from the main body 110 by means of an inductive coupling.

Electrical power to the motor 132 in the lid may be provided as described earlier.

The inner container 120 is insertable in and removable or detachable from the opening 116 in the main body 110. The inner container may be loosely or tightly fitted in the opening 116. Alternatively, the inner container 120 and the main body 110 are provided with fixating element to releasably fixate the inner container 120 in the opening 116. The fixating elements can be embodied in various ways as discussed before.

The inner container 120 comprises a handle 112 for easily removing the inner container 120 from the main body 110. In the embodiment as disclosed on Figure 3, the handle 112 is connected to a sidewall of the inner container 120. To properly accommodate the inner container 120 in the main body 110, a further opening 118 slit, opening, recess or the like 118 is provided at the top of the sidewall of the main body 110. Alternatively, the handle 112 is attached at the top of the inner container 120 and e.g. curving above the rim or edge of the main body at the appropriate place. In that way, no slit, opening, etc. has to be provided in the main body 110. It will be apparent to a person skilled in the art that a handle connected to the inner container 120 does not necessarily have to be shaped as disclosed in Figure 3. As an alternative example, a half-circle handle connected to opposite sides of the upper rim of the inner container 120 may be provided, enabling the inner container 120 to be carried as a basket or a bucket. As another example, the handle may e.g. also be substantially flat at least at the part that goes between cover and the main body when the device is assembled.

The further opening 118 may also be provided in the cover or lid. As yet another alternative, both the main body and the cover or lid may each comprise a further opening, i.e. with the handle being accommodated partially by each further opening.

The various provisions of a handle on the inner container and/or provision of one or more further openings may also be provided for the embodiments shown in the other figures.

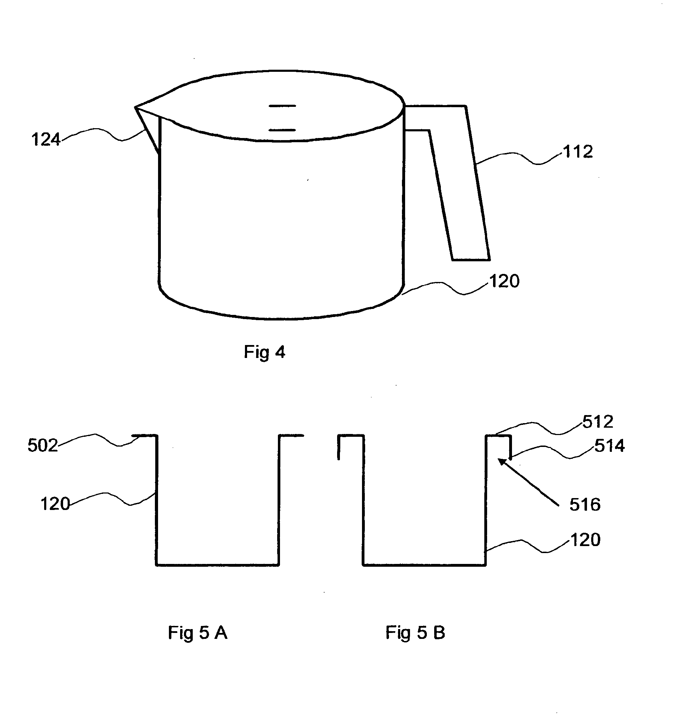

Figure 4 shows an inner container 120 as another embodiment of the inner container according to the invention. The inner container 120 comprises a handle 112 and a pouring spout 124 at the upper rim of the inner container 120. The pouring spout 124 facilitates pouring a cooled and/or mixed liquid like whipped cream. In addition, the pouring spout 124 prevents leakage of liquid from the inner container 120 in the opening 116 of the main body 110 (see e.g. Figures 1-3) after contents of the inner container 120 have been poured in another container like a coffee cup. Drips - if any - will remain at the tip of the spout, which will not overlap with the opening 116 (Figure 1).

The inner container 120 has been disclosed having a flat horizontal bottom and a cylindrical wall substantially vertically positioned on the flat bottom. The inventor has appreciated that this provides an inner container that is difficult to empty, in particular in the corners between the wall and the bottom. To address this issue, the inner container 120 may also by provided with a concave bottom instead of a flat bottom, i.e. a bottom that is deeper in the middle than at the sides. The concave form of the bottom may be further implemented by having a spherical, elliptical, oval, parabolic or other concave form.

Additionally or alternatively, the cylindrical wall of the inner container is not substantially vertical, but provides a larger diameter at the top of the inner container 120 than at the bottom of the inner container 120. This makes the angle between the bottom of the inner container and the wall of the inner container less sharp, making emptying or cleaning the inner container more convenient.

Figure 5 A shows a cross-section of an inner container 120 comprising an extended upper rim 502 with an orientation of about 90° to the sidewall of the inner container 120. The upper rim prevents or at least reduces the risk of leakage of liquid from the inner container in the opening 116 of the main body (see e.g. Figures 1 - 3). It is to be understood that the rims 512, 514 may be curved partially or fully. Furthermore, the orientation angle may be different than about 90° to the sidewall of the container 120, e.g. between about 85° - about 95° or other angles.

Figure 5 B shows a cross-section of an inner container 120 comprising an extended upper rim 512 connected to an outer rim 514. The outer rim 514 and the outer wall of the inner container 120 form a cavity 516. When the inner container 120 is fit in the opening 116 of the main body 110 (see e.g. Figures 1 - 3), the upper rim of the main body 110 fits in the cavity 516. In this way, the risk of leakage of liquid from the inner container in the opening 116 of the main body 110 is even further reduced than with the solution discussed in accordance with Figure 5 A. It is to be understood that the rims 512, 514 may be curved partially or fully.

In again another embodiment of the device according to the invention that will be discussed referring to Figure 1, the top of the circumference of the opening 116 is provided with a lining or a sealing element comprising a flexible material like silicon rubber, natural rubber, or similar to seal any potential opening between the outer wall of the inner container 120 and the inner wall of the main body 110 at the location of the opening 116. Alternatively, the lining is provided at the top of the outer wall of the inner container 120.

In another alternative, referring to Figure 5 B, the lining is provided in the cavity 516. In yet another alternative, the lining is provided at a lower portion of either the opening 116 or the inner container 120.

The rims disclosed in Figure 5 A and Figure 5 B may also serve for connecting a handle to the inner container. In such embodiments, the further opening 118 would be superfluous and can therefore be omitted.

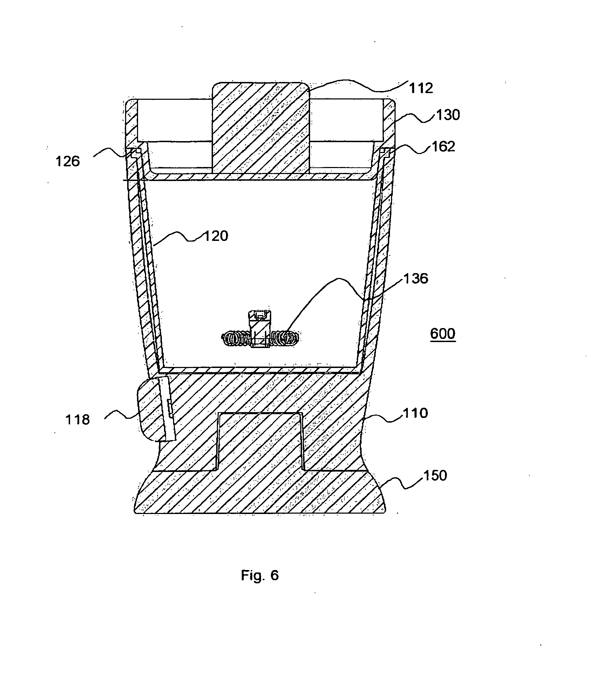

Figure 6 discloses a cream whipper 600 as a device not forming part of the invention such as claimed. The cream whipper 600 comprises a main body 110, a base plate 150 and a lid or cover 130. In addition, figure 6 discloses an inner container 120. The inner container 120 comprises an outstanding rim 126 at the top of the inner container and a handle 112.

The main body has a control knob 155 attached to it for controlling the operation of the cream whipper 600 as described with another embodiment of the device according to the invention.

The inner container 120 is fit in the main body 110. The outstanding rim 126 of the inner container 120 fits in a circular recess 162 at the top of the opening of the main body 110, thus providing a closed fit between the inner container 120 and the main body 110. In this way, any liquid is prevented from entering the main body 110 where such liquid can jeopardise the operations of the cream whipper 600, in particular by potential damage to electrical circuitry of the cream whipper 600.

The lid 130 has a lower closing part having an outer diameter that is substantially equal to the inner diameter of an upper part of the inner container 120. In this way, the lid 130 is fitted in the inner container 120 rather than in fitted to the main body 110. In this way, the inner container 120 can be lifted out of the main body 110 by picking up the lid 130. This eliminates the need for a handle being attached to the inner container 120. Additionally, there is no risk of spilling any liquid from the inner container 120 into the main body 110. Alternatively, the lid 130 is fitted on the main body 110 and protruding in the inner container 120.

The lid 130 can be connected to the inner container 120 in various ways. For example, either the lid 130 or the upper part of the inner container 120 is provided with a flexible O-ring. By putting the lid 130 on the inner container 120, the O-ring is squeezed between the lid 130 and the container 120, thus increasing the friction force between the lid 130 and the inner container. By means of this friction force, the inner container 120 can be lifted out of the main body 110. Subsequently, the inner container can be put in the refrigerator with the lid 130 closing the inner container. Alternatively, another lid is available for closing the inner container 120 as the atmosphere in a refrigerator is not always suitable for a long storage period of electronics comprised by the lid 130. As another alternative, the driving element, i.c. an electromotor, is releasably connected to the lid 130 and can be removed from the lid 130 before putting the inner container 120 with the lid 130 in the refrigerator.

Alternatively, the lid 130 is connected to the inner container 120 by other means, including the means discussed as alternatives for connecting the inner container 120 to the main body 110 for other embodiments of the device according to the invention, including, but not limited to bayonet fittings, spring loaded protrusions in for example the lid 130 fitting in recesses in the inner container 120 and magnetic coupling. In addition to these means, an additional sealing element like a flexible O-ring may be provided.

With respect to functional elements, variations as discussed before apply to the cream whipper 600 as well. This applies to speed and timing control of the electromotor, the location of the electromotor and other elements. This means that the circular annular spring 136 can be driven by an electromotor or other driving means located in either the lid 130 or the main body 110. As discussed before, the circular annular spring 136 can be replaced by a conventional wire whisk or other agitation means.

The embodiments of the invention discussed so far are related to whipping cream. However, as a person skilled in the art will appreciate, embodiments of the invention can also be used for whipping egg whites. Though the principle of egg white getting a more solid nature by beating is quite different from the principle of cream getting a more solid nature by beating, the beating process for both is generally the same. For whipping egg whites, higher rotations speeds of the whisk are preferred. To make the embodiments of the invention discussed so far more suitable for whipping or beating egg whites, the speed can be made adjustable to speeds between 600 and 1200 revolutions per minute.

While referring to an inner container, it is noted that, unless otherwise clearly apparent from the context, an inner container for use with for example but not limited to a device for whipping cream or other liquids is meant. Such container is to be understood to be an inner container that fits within a main body of the device for whipping liquids in a way that the outer perimeter or at least part thereof like the upper rim fits closely and preferably tightly with the inner wall of the main body and in particular the wall of an opening in the main body arranged for receiving the inner container.

Though steel and aluminium have been disclosed as materials for the inner container 120, a person skilled in the art will appreciate that also other metals or even materials other than steel may be used. In particular copper is a material advantageously used for use of embodiments of the invention with beating or whipping egg whites. This is because copper helps in creating a tighter bond in egg whites because of the reactive sulphur in the egg whites.

Referring to Figure 1 through Figure 3 and Figure 6, alternatively, the base plate 150 and the contact recess 111 may be omitted, while connecting the power cord 154 directly to the main body 110 for supplying electrical energy, preferably at the lower end of the main body 110. In particular with the removable inner container 120, there is at least less need for the main body to be cordless for convenient handling.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa. When data is being referred to as audiovisual data, it can represent audio only, video only or still pictures only or a combination thereof, unless specifically indicated otherwise in the description of the embodiments.

In the description above, it will be understood that when an element such as layer, region or substrate is referred to as being "on" or "onto" another element, the element is either directly on the other element, or intervening elements may also be present.

Furthermore, the invention may also be embodied with less components than provided in the embodiments described here, wherein one component carries out multiple functions. Just as well, the invention may be embodied using more elements than depicted in Figures 1 through 6, wherein functions carried out by one component in the embodiment provided are distributed over multiple components.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

The device and embodiments thereof according to the invention and as described throughout the text may also be a milk frother, where the various embodiments, aspects, elements, advantages, etc. mentioned throughout the entire text is equally applicable, e.g. with the replacement of the (optional) cooling element for an (optional) heating element and e.g. change of operating parameters, like rotation speed of the agitation element, adjusted to froth milk as readily known in the art by a skilled person.

## Claims

1. A device (100, 200, 300, 600) for whipping or agitating a liquid to give the liquid a more solid or frothy nature, comprising:
- a removable inner container (120), which inner container is suitable for receiving the liquid,
- a main body (110) comprising an opening (116) adapted to releasably receive the inner container where the inner container (120) fits within the main body (110);
- an agitation element (136) for agitating the liquid when the liquid is received in the inner container and the inner container is received in the opening of the main body;
- a driving element (132) for driving the agitation element wherein the driving element is located at the top of the device; and
- an electrical connection (154, 152, 111) for providing electrical energy to the driving element (132);
- a cover (130) adapted to cover the inner container (120) when the inner container (120) is received by the main body (110) and wherein the driving element (132) is comprised by the cover (130); and
- wherein the inner container (120) comprises a handle (112).

2. The device as claimed in claim 1, wherein a height of the inner container (120) is received as selected according to one of:
- at least 75%;
- at least 90%;
- 95 % to 99%; and
- 95% to 100 %.

3. The device as claimed in any one of claims 1-2, wherein the handle (112) is substantially flat at least at a part that goes between the cover and the main body when the inner container (120) is received by the main body (110) and when the cover (130) covers the inner container (120).

4. The device as claimed in any one of claims 1-3, wherein the agitation element is arranged to agitate the liquid by means of a rotating movement.

5. The device as claimed in any one of claims 1-4, wherein the agitation element comprises a circular annular spring (136) and/or a wire whisk.

6. Device as claimed in claims 1-5, wherein the device comprises a further opening (118) at the side for receiving the handle (112) of the inner container when fitted in the opening (116).

7. The device as claimed in claim 6, wherein the further opening is a slit (118).

8. Device as claimed in claims 1-7, wherein a sealing element is provided around the opening.

9. Device as claimed in claims 1-8, further comprising at least one fixation element for fixating the container to the device upon or after receiving the container in the opening.

10. Device as claimed in claim 9, wherein the fixation element is at least one of the following:
a) A magnetic coupling;
b) A first thread for screwing in a mating second thread;
c) A recess for accommodating a spring or a spring-loaded element;
d) A spring or a spring-loaded element;
e) An L-shaped recess or opening for accommodating a protrusion constituting a bayonet closing;
f) A protrusion usable in conjunction with an L-shaped recess or opening constituting a bayonet closing.

11. The device as claimed in claims 1-10, wherein the cover comprises a closing part having an outer diameter substantially equal to the inner diameter of an upper part of the inner container thus closing the inner container if fitted on the inner container.

12. The device as claimed in claims 1-11, wherein the inner container has an exterior wall arranged to fit closely in the opening of the main body for at least a part of the exterior wall.

13. The device as claimed in claims 1-12, wherein the inner container comprises an upper rim (502, 512, 514) of which at least a portion extends beyond the upper level of the device when the inner container is received in the opening of the device.

14. The device as claimed in claim 13, wherein the upper rim (502, 512) of the container has an orientation of substantially 90° or substantially 85° - substantially 95° to the sidewall of the inner container and points away from the centre of the inner container.

15. The device as claimed in claims 1-14, wherein the inner container has a concave bottom.

## Patentansprüche

1. Vorrichtung (100, 200, 300, 600) zum Schlagen oder Rühren einer Flüssigkeit, um der Flüssigkeit eine festere oder schaumige Konsistenz zu verleihen, umfassend:
- einen abnehmbaren inneren Behälter (120), wobei der innere Behälter für die Aufnahme der Flüssigkeit geeignet ist;
- ein Hauptgehäuse (110), umfassend eine Öffnung (116), die für die lösbare Aufnahme des inneren Behälters beschaffen ist, wobei der innere Behälter (120) in das Hauptgehäuse (110) passt;
- ein Rührelement (136) zum Rühren der Flüssigkeit, wenn die Flüssigkeit in dem inneren Behälter aufgenommen ist und der innere Behälter in der Öffnung des Hauptgehäuses aufgenommen ist;
- ein Antriebselement (132) zum Antrieb des Rührelements, wobei sich das Rührelement an der Oberseite der Vorrichtung befindet; und
- einen Stromanschluss (154, 152, 111) zur Bereitstellung von elektrischem Strom am Antriebselement (132);
- einen Deckel (130), der zum Abdecken des inneren Behälters (120) beschaffen ist, wenn der innere Behälter (120) vom Hauptgehäuse (110) aufgenommen ist, und wobei das Antriebselement (132) vom Deckel (130) umgefassen ist, und
- wobei der innere Behälter (120) einen Griff (112) umfasst.

2. Vorrichtung nach Anspruch 1, wobei eine aufgenommene Höhe des inneren Behälters (120) ausgewählt ist aus:
- mindestens 75 %;
- mindestens 90 %;
- 95 % bis 99 %; und
- 95 % bis 100 %.

3. Vorrichtung nach einem der Ansprüche 1-2, wobei der Griff (112) mindestens an einem Abschnitt zwischen dem Deckel und dem Hauptgehäuse im Wesentlichen flach ist, wenn der innere Behälter (120) im Hauptgehäuse (110) aufgenommen ist und wenn der Deckel (130) den inneren Behälter (120) abdeckt.

4. Vorrichtung nach einem der Ansprüche 1-3, wobei das Rührelement so angeordnet ist, dass es die Flüssigkeit mittels einer rotierenden Bewegung rührt.

5. Vorrichtung nach einem der Ansprüche 1-4, wobei das Rührelement eine kreisförmige Ringfeder (136) und/oder einen Schneebesen umfasst.

6. Vorrichtung nach den Ansprüchen 1-5, wobei die Vorrichtung eine weitere Öffnung (118) an der Seite zur Aufnahme des Griffs (112) des inneren Behälters umfasst, wenn dieser in der Öffnung (116) sitzt.

7. Vorrichtung nach Anspruch 6, wobei die weitere Öffnung ein Schlitz (118) ist.

8. Vorrichtung nach den Ansprüchen 1-7, wobei um die Öffnung eine Dichtung vorgesehen ist.

9. Vorrichtung nach den Ansprüchen 1-8, weiterhin umfassend mindestens ein Befestigungselement für die Befestigung des Behälters in der Vorrichtung bei oder nach dem Aufnehmen des Behälters in der Öffnung.

10. Vorrichtung nach Anspruch 9, wobei das Befestigungselement mindestens eines der Folgenden ist:
a) eine Magnetkupplung;
b) ein erstes Gewinde in einem zweiten passenden Gewinde;
c) eine Aussparung zur Aufnahme einer Feder oder eines federbelasteten Elements;
d) eine Feder oder ein federbelastetes Element;
e) eine L-förmige Aussparung oder Öffnung zur Aufnahme eines Vorsprungs, was einen Bajonettverschluss darstellt;
e) ein Vorsprung, der in Verbindung mit einer L-förmigen Aussparung oder Öffnung verwendbar ist, was einen Bajonettverschluss darstellt.

11. Vorrichtung nach den Ansprüchen 1-10, wobei der Deckel ein Verschlussteil umfasst, dessen Außendurchmesser im Wesentlichen gleich dem Innendurchmesser eines oberen Abschnitts des inneren Behälters ist, wodurch der innere Behälter beim Aufsetzen auf dem inneren Behälter verschlossen wird.

12. Vorrichtung nach den Ansprüchen 1-11, wobei der innere Behälter eine Außenwand aufweist, die derart beschaffen ist, dass sie mindestens an einem Abschnitt der Außenwand eng in der Öffnung des Hauptgehäuses sitzt.

13. Vorrichtung nach den Ansprüchen 1-12, wobei der innere Behälter einen oberen Rand (502, 512, 514) umfasst, wobei sich mindestens ein Abschnitt über die obere Kante der Vorrichtung erstreckt, wenn der innere Behälter in der Öffnung der Vorrichtung aufgenommen ist.

14. Vorrichtung nach Anspruch 13, wobei der obere Rand (502, 512) des Behälters eine Ausrichtung von im Wesentlichen 90° oder im Wesentlichen 85° - im Wesentlichen 95° zur Seitenwand des inneren Behälters aufweist und von der Mitte des inneren Behälters weg zeigt.

15. Vorrichtung nach den Ansprüchen 1-14, wobei der innere Behälter einen konkaven Boden aufweist.

## Revendications

1. Dispositif (100, 200, 300, 600) pour fouetter ou agiter un liquide afin de rendre le liquide plus solide ou mousseux, comportant :
- un récipient intérieur (120) amovible, ledit récipient intérieur étant adapté pour recevoir le liquide ;
- un élément principal (110) comportant une ouverture (116) adaptée pour loger de manière amovible le récipient intérieur, le récipient intérieur (120) tenant dans l'élément principal (110) ;
- un élément d'agitation (136) pour agiter le liquide lorsque le liquide est placé dans le récipient intérieur et que le récipient intérieur est logé dans l'ouverture de l'élément principal ;
- un élément d'entraînement (132) pour entraîner l'élément d'agitation, dans lequel l'élément d'entraînement est situé au sommet du dispositif ; et
- une connexion électrique (154, 152, 111) pour alimenter l'élément d'entraînement (132) en énergie électrique ;
- un couvercle (130) adapté pour recouvrir le récipient intérieur (120) lorsque le récipient intérieur (120) est logé dans l'élément principal (110) et dans lequel l'élément d'entraînement (132) est compris dans le couvercle ; et
- dans lequel le récipient intérieur (120) comporte une poignée (112).

2. Le dispositif selon la revendication 1, dans lequel une hauteur du récipient intérieur (120) est logée dans l'élément principal, telle que choisie parmi les suivantes :
- au moins 75 % ;
- au moins 90 % ;
- de 95 % à 99 % ; et
- de 95 % à 100 %.

3. Le dispositif selon l'une quelconque des revendications 1 à 2, dans lequel la poignée (112) est principalement plate, au moins en sa partie située entre le couvercle et l'élément principal lorsque le récipient intérieur (120) est logé dans l'élément principal (110) et lorsque le couvercle (130) recouvre le récipient intérieur (120).

4. Le dispositif selon l'une quelconque des revendications 1 à 3, dans lequel l'élément d'agitation est positionné pour agiter le liquide grâce à un mouvement de rotation.

5. Le dispositif selon l'une quelconque des revendications 1 à 4, dans lequel l'élément d'agitation comporte un ressort annulaire circulaire (136) et/ou un fouet en fil métallique.

6. Dispositif selon les revendications 1 à 5, dans lequel le dispositif comporte une ouverture supplémentaire (118) située sur le côté pour loger la poignée (112) du récipient intérieur lorsque celui-ci est placé dans l'ouverture (116).

7. Le dispositif selon la revendication 6, dans lequel l'ouverture supplémentaire est une fente (118).

8. Dispositif selon les revendications 1 à 7, dans lequel un élément d'étanchéité entoure l'ouverture.

9. Dispositif selon les revendications 1 à 8, comportant en outre au moins un élément de fixation pour fixer le récipient sur le dispositif au moment où le récipient est logé dans l'ouverture ou après.

10. Dispositif selon la revendication 9, dans lequel l'élément de fixation est au moins l'un des suivants :
a) un couplage magnétique ;
b) un premier filetage pour visser un deuxième filetage correspondant ;
c) un évidement pour accueillir un ressort ou un élément à ressort ;
d) un ressort ou un élément à ressort ;
e) un évidement en forme de L ou une ouverture pour accueillir une saillie constituant une fermeture à baïonnette ;
f) une saillie pouvant être utilisée en association avec un évidement en forme de L ou une ouverture constituant une fermeture à baïonnette.

11. Le dispositif selon les revendications 1 à 10, dans lequel le couvercle comporte une partie de fermeture dont le diamètre extérieur est essentiellement égal au diamètre intérieur d'une partie supérieure du récipient intérieur, fermant ainsi le récipient intérieur lorsqu'il est placé sur le récipient intérieur.

12. Le dispositif selon les revendications 1 à 11, dans lequel le récipient intérieur est muni d'une paroi extérieure dont au moins une partie peut se loger avec précision dans l'ouverture de l'élément principal.

13. Le dispositif selon les revendications 1 à 12, dans lequel le récipient intérieur comporte un rebord supérieur (502, 512, 514) dont une partie au moins s'étend au-delà du niveau supérieur du dispositif lorsque le récipient intérieur est logé dans l'ouverture du dispositif.

14. Le dispositif selon la revendication 13, dans lequel le rebord supérieur (502, 512) du récipient fait un angle d'environ 90° ou environ 85° à environ 95° avec la paroi latérale du récipient intérieur et est dirigé à l'opposé du centre du récipient intérieur.

15. Le dispositif selon les revendications 1 à 14, dans lequel le fond du récipient intérieur est concave.
